# EUROPEAN PATENT SPECIFICATION

(11) **EP 1 954 992 B1**
(45) Date of publication and mention of the grant of the patent: **07.02.2018**
(21) Application number: 05852559.3
(22) Date of filing: 01.12.2005
(51) Int. Cl.: F25B 49/00, F25B 1/00

(54) **METHOD AND APPARATUS OF OPTIMIZING THE COOLING LOAD OF AN ECONOMIZED VAPOR COMPRESSION SYSTEM**
VERFAHREN UND VORRICHTUNG ZUR OPTIMIERUNG DER KÜHLLAST EINES DAMPFKOMPRESSIONSSYSTEMS MIT ECONOMISER
PROCEDE D'OPTIMISATION DE LA CHARGE DE REFROIDISSEMENT D'UN SYSTEME A COMPRESSION DE VAPEUR A ECONOMIE EN FAISANT VARIER LA VITESSE D'UN COMPRESSEUR MONO-ETAGE

(43) Date of publication of application: 13.08.2008
(73) Proprietor: Carrier Corporation, Farmington, CT 06034-4015 (US)
(72) Inventor: BEAGLE, Wayne P., Chittenango, NY 13037 (US)
(74) Representative: Taylor, Adam David
(86) International application number: PCT/US2005/043368
(87) International publication number: WO 2007/064321

(56) References cited:
- JP-A- 4 255 581
- JP-A- 10 122 626
- JP-A- 57 153 977
- JP-A- 60 033 445
- JP-A- 2003 065 615
- JP-A- 2004 340 410
- US-A1- 2003 010 046
- US-B1- 6 293 123
- US-B1- 6 434 960
- US-B1- 6 474 087

## Description

### BACKGROUND OF THE INVENTION

The present invention relates generally to a method of optimizing the cooling load of an economized vapor compression system by varying a speed of a single stage compressor.

A vapor compression system includes a compressor, a heat rejecting heat exchanger, an expansion device, and a heat accepting heat exchanger. Refrigerant circulates though the closed circuit system. The refrigerant exits the compressor through a discharge port at a high pressure and a high enthalpy. The refrigerant then flows through the heat rejecting heat exchanger at a high pressure and rejects heat to an external fluid medium. The refrigerant then flows through the expansion device, which expands the refrigerant to a low pressure. After expansion, the refrigerant flows through the heat accepting heat exchanger and absorbs heat from an air stream to cool a refrigerated container. The refrigerant then re-enters the compressor through a suction port, completing the cycle.

An economized cycle is commonly used to enhance performance and increase both capacity and efficiency of the vapor compression system. In an economized cycle, the refrigerant is split into two flow paths after exiting the heat rejecting heat exchanger. The refrigerant in an economizer flow path is expanded to an intermediate pressure and exchanges heat with the refrigerant in a main flow path in an economizer heat exchanger. The refrigerant in the economizer flow path is injected into an economizer port of the compressor. The refrigerant in the main flow path is expanded in the expansion device. By further cooling the refrigerant in the main flow path, the inlet enthalpy to the heat accepting heat exchanger decreases, increasing the cooling capacity of the vapor compression system.

Prior vapor compression systems employ a fixed speed multi-stage reciprocating compressor including at least two compression stages. Refrigerant is compressed in a first stage. The refrigerant in the economizer flow path is injected at an intermediate pressure between the first stage and a second stage. The refrigerant is then compressed in the second stage. A drawback to employing a multi-stage compressor is that it is expensive. Additionally, multi-stage compressors do not perform as well as single stage compressors in certain operating conditions. Finally, as the speed of the multi-stage compressor is fixed, the compressor is unable to be controlled to match the load requirements of the vapor compression system.

Hence, there is a need in the art for a method of optimizing the cooling load of an economized vapor compression system that overcomes the drawbacks and shortcomings of the prior art.

US 6293123 B1 discloses a vapor compression system of the type described in the preamble of claim 1.

### SUMMARY OF THE INVENTION

The invention provides a vapor compression system as defined in claim 1 and a method as defined in claim 12.

The speed of the compressor is varied to match the cooling load requirements of the vapor compression system. The compressor includes a motor that operates the compressor at a variable speed. By adjusting the speed of the compressor, the mass flow rate of the refrigerant through the vapor compression system can be controlled to efficiently cool the refrigerated container. Increasing the speed of the compressor increases the mass flow rate of the refrigerant and the capacity of the heat accepting heat exchanger to cool the refrigerated container. Decreasing the speed of the compressor decreases the mass flow rate of the refrigerant and the capacity of the heat accepting heat exchanger to cool the refrigerated container.

The vapor compression system includes an air temperature sensor that measures an air temperature in the refrigerated container. A desired set point temperature is programmed into a microcontroller. When the air temperature sensor detects that the air temperature is above a threshold temperature, the microcontroller increases the speed of the compressor to increase the mass flow rate of the refrigerant and therefore the cooling capacity of the vapor compression system.

When the air temperature sensor detects that the air temperature is within a predetermined range from the set point temperature, the microcontroller sends a signal to slightly decrease the speed of the compressor. This allows for fine adjustment of the cooling capacity of the vapor compression system to prevent overcooling of the refrigerated container. Once the air temperature sensor detects that the air temperature equals the set point temperature, the microcontroller sends a signal to slow down the motor of the compressor to maintain the set point temperature and match the cooling load of the vapor compression system.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 schematically illustrates an economized vapor compression system of the present invention employing a variable speed single stage compressor;
Figure 2A schematically illustrates the compressor when refrigerant enters a compression chamber through a suction port;
Figure 2B schematically illustrates the compressor when refrigerant enters the compression chamber through an economizer port; and
Figure 2C schematically illustrates the compressor when compressed refrigerant exits the compression chamber through a discharge port.

### DETAILED DESCRIPTION OF THE PREFERRED EMBODIMENT

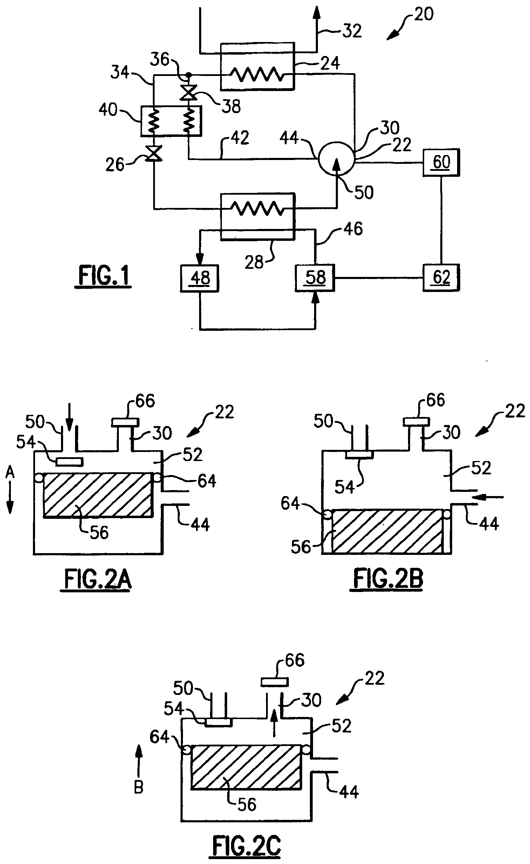

Figure 1 illustrates an example vapor compression system 20 including a single stage compressor 22, a heat rejecting heat exchanger 24, an expansion device 26, and a heat accepting heat exchanger 28. Refrigerant circulates though the closed circuit vapor compression system 20. The refrigerant exits the compressor 22 through a discharge port 30 at a high pressure and a high enthalpy.

The refrigerant then flows through the heat rejecting heat exchanger 24, such as a condenser or gas cooler. An external fluid medium 32, such as water or air, flows through the heat rejecting heat exchanger 24 and exchanges heat with the refrigerant flowing through the heat rejecting heat exchanger 24. The refrigerant rejects heat to the external fluid medium 32 and exits the heat rejecting heat exchanger 24 at a relatively low enthalpy and a high pressure.

The refrigerant then splits into a main flow path 34 and an economizer flow path 36. Refrigerant in the economizer flow path 36 is expanded to an intermediate pressure in an economizer expansion device 38 and exchanges heat with the refrigerant in the main flow path 34 in an economizer heat exchanger 40, cooling the refrigerant in the main flow path 34. The refrigerant in the economizer flow path 36 flows along an economizer return path 42 and is injected into an economizer port 44 of the compressor 22 at an intermediate pressure between a suction pressure and a discharge pressure.

The refrigerant in the main flow path 34 is expanded by the expansion device 26, reducing the pressure of the refrigerant. The expansion device 26 can be a mechanical expansion device (TXV), an electronic expansion valve (EXV) or other type of known expansion device.

After expansion, the refrigerant flows through the heat accepting heat exchanger 28 and absorbs heat from an external air stream 46 to cool a space inside a refrigerated container 48. In one example, the refrigerated container 48 is used for shipping or transporting items which need to be cooled. For example, the refrigerated container 48 can be a cargo space or trailer of a vehicle, such as a truck. The refrigerant exits the heat accepting heat exchanger 28 at a relatively high enthalpy and a low pressure. The refrigerant then enters a suction port 50 of the compressor 22, completing the cycle.

As shown in Figure 2A, the compressor 22 is a single stage compressor that includes at least one compression chamber 52. The compressor 22 can include a single compression chamber or multiple compression chambers. During a suction stroke of the compressor 22, the refrigerant from the heat accepting heat exchanger 28 enters the compressor chamber 52 through the suction port 50 at the suction pressure. A suction valve 54 allows the refrigerant to enter the compression chamber 52. A piston 56 blocks the economizer port 44 and prevents the refrigerant in the economizer return path 42 from entering the compression chamber 52 through the economizer port 44. A seal 64 between the piston 56 and the walls of the compression chamber 52 prevents refrigerant from flowing around the piston 56. As the refrigerant enters the compression chamber 52 through the suction port 50, the piston 56 moves in direction A away from the suction port 50, enlarging the compression chamber 52 to the position shown in Figure 2B.

Towards the end of the suction stroke, the piston 56 no longer blocks the economizer port 44, allowing the refrigerant in the economizer return path 42 to enter the compressor chamber 52 through the economizer port 44. The intermediate pressure of the refrigerant entering the compression chamber 52 through the economizer port 44 causes the suction valve 54 to cover the suction port 50, preventing the refrigerant from the heat accepting heat exchanger 28 from entering the compression chamber 52 through the suction port 50.

As shown in Figure 2C, during a discharge stroke, the piston 56 moves in direction B opposite to the direction A, compressing the refrigerant to the higher discharge pressure. The piston 56 blocks the economizer port 44 and prevents the refrigerant in the economizer return path 42 from entering the compression chamber 52 through the economizer port 44. The increase in pressure of the refrigerant opens a discharge valve 66, allowing the refrigerant to exit the compression chamber 52 through the discharge port 30 and flow to the heat rejecting heat exchanger 24.

The speed of the compressor 22 is varied to match the cooling load requirements of the vapor compression system 20. The compressor 22 includes a motor 60 that operates the compressor 22 at variable speeds. Preferably, the compressor 22 operates at at least two speeds. By adjusting the speed of the compressor 22, the mass flow rate of the refrigerant flowing through the vapor compression system 20 can be changed. Controlling the mass flow rate of the refrigerant through the vapor compression system 20 allows the load requirements of the vapor compression system 20 to be efficiently matched to optimally cool the refrigerated container 48. That is, by controlling the speed of the compressor 22, the load requirements of the vapor compression system 20 can be matched to optimally cool the refrigerated container 48.

Increasing the speed of the compressor 22 increases the mass flow rate of the refrigerant and the capacity of the heat accepting heat exchanger 28 to cool the refrigerated container 48. Decreasing the speed of the compressor 22 decreases the mass flow rate of the refrigerant and the capacity of the heat accepting heat exchanger 28 to cool the refrigerated container 48.

The vapor compression system 20 includes an air temperature sensor 58 that measures an air temperature representative of an air temperature in the refrigerated container 48. In one example, the temperature sensor 58 measures the air temperature of the air drawn from the refrigerated container 48. The air temperature sensor 58 communicates with a microcontroller 62. A desired set point temperature of the air in the refrigerated container 48 is programmed into the microcontroller 62.

When the air temperature sensor 58 detects that the air temperature is above a threshold temperature, the microcontroller 62 increases the speed of the compressor 22 to increase the mass flow rate of the refrigerant and therefore the cooling capacity of the vapor compression system 20. The microcontroller 62 runs an algorithm to determine the speed of the compressor 22 that matches the cooling load requirements of the vapor compression system 20.

Once the air temperature sensor 58 detects that the air temperature is within a predetermined range of the set point temperature, the microcontroller 62 slightly decreases the speed of the compressor 22. This reduces the mass flow rate of the refrigerant and the cooling capacity of the vapor compression system 20, allowing for fine adjustment of the cooling capacity of the vapor compression system 20 to prevent overcooling of the refrigerated container 48.

Once the air temperature sensor 58 detects that the air temperature equals the set point temperature, the microcontroller 62 sends a signal to slow down the motor 60 of the compressor 22 to reduce the mass flow rate of the refrigerant through the vapor compression system 20.

Fine adjustment of the cooling capacity of the vapor compression system 20 prevents overcooling of the refrigerated container 48 that would make the vapor compression system 20 inefficient. Once the motor 60 of the compressor 22 is slowed down, the heat accepting heat exchanger 28 continues to cool the refrigerated container 48 for a short period of time. If the compressor 22 continued to operate at the current speed with the current cooling capacity until the set point temperature was detected by the air temperature sensor 58, the heat accepting heat exchanger 28 would continue to cool the refrigerated container 48, and the temperature of the air in the refrigerated container 48 would drop below the set point temperature. This overcooling would make the vapor compression system 20 inefficient. By readjusting the speed on the compressor 22 when the air temperature is within the predetermined range, greater control of the cooling capacity of the vapor compression system 20 is possible. The compressor 22 can be unloaded in other ways, and one skilled in the art would know how to unload the compressor 22.

In one example, the set point temperature is 0°F and the predetermined range is 10°F. If the air temperature sensor 58 detects that the air temperature increases above the threshold temperature, the microcontroller 62 increases the speed of the compressor 22 to increase the mass flow rate of the refrigerant and the cooling capacity of the vapor compression system 20. When the air temperature sensor 58 detects that the air temperature is 10°F (within 10 degrees of the set point temperature of 0°F), the microcontroller 62 decreases the speed of the compressor 22 and therefore the amount of cooling provided by the heat accepting heat exchanger 28. Once the air temperature sensor 58 detects that the air temperature is 0°F, the microcontroller 62 sends a signal to slow down the motor 60 of the compressor 22.

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A vapor compression system comprising:
a variable speed single stage compressor (22) to compress a refrigerant to a high pressure, the compressor including a suction port (50), a discharge port (30), and an economizer port (44);
an economizing heat exchanger (40);
a heat accepting heat exchanger (28) for exchanging heat between the refrigerant and an airflow to heat the refrigerant and cool the airflow, wherein the airflow is provided to an area (48);
a temperature sensor (58) to detect an air temperature of air in the area; and
a controller (62) that adjusts a speed of the variable speed single stage compressor based on the air temperature to match a cooling load requirement of the vapor compression system to cool the area;
**characterised in that** the variable speed single stage compressor includes a compression chamber (52), a piston (56) that moves in the compression chamber, and a seal (64) disposed between the piston and the walls of the compression chamber, wherein during a suction stroke the piston moves in a first direction to expand a volume of the compression chamber and blocks the economizer port to prevent the refrigerant in an economized path (36) from entering the compression chamber and during a discharge stroke the piston moves in an opposing second direction to reduce the volume of the compression chamber to compress the refrigerant and blocks the economizer port to prevent the refrigerant in the economized path from entering the compression chamber, wherein during the suction stroke of the piston a pressure-operated suction valve (54) opens to allow refrigerant from a heat accepting heat exchanger (28) into the compression chamber and a pressure-operated discharge valve (66) is closed, wherein during the discharge stroke of the piston the pressure-operated discharge valve opens to allow the refrigerant to exit the compression chamber and flow toward a heat rejecting heat exchanger (24) and the pressure-operated suction valve is closed, and wherein toward the end of the suction stroke the piston no longer blocks the economizer port such that refrigerant at intermediate pressure enters the compression chamber from the economizer port and closes the pressure-operated suction valve, preventing refrigerant from entering through the suction port.

2. The system as recited in claim 1 wherein the heat rejecting heat exchanger (24) is for cooling the refrigerant and a main expansion device (26) to expand the refrigerant to a low pressure.

3. The system as recited in claim 2,
wherein the refrigerant from the heat rejecting heat exchanger (24) is split into the economized path (36) and a main path (34), and the refrigerant in the economized path is reduced to an intermediate pressure in an economizer expansion device (38),
wherein the refrigerant in the main path and the refrigerant in the economized path exchange heat therebetween in the economizer heat exchanger, and
wherein the refrigerant in the economized path is injected into the economizer port of the variable speed single stage compressor (22) and the refrigerant in the main path is expanded in the main expansion device (26).

4. The system as recited in claim 3 wherein the compression chamber (52) is a single compression chamber.

5. The system as recited in claim 1 further including a motor (60) to control the speed of the variable speed single stage compressor (22) and adjust a mass flow rate of the refrigerant through the vapor compression system.

6. The system as recited in claim 1 wherein the air temperature is a return air temperature of the air drawn from the area, wherein the area is a refrigerated container (48).

7. The vapor compression system of claim 1 comprising
a motor (60) to control a speed of the variable speed single stage compressor (22) and adjust a mass flow rate of the refrigerant through the vapor compression system;
a heat rejecting heat exchanger (24) for cooling the refrigerant;
a main expansion device (26) to expand the refrigerant to a low pressure;
wherein the refrigerant from the heat rejecting heat exchanger is split into the economized path (36) and a main path (34), and the refrigerant in the economized path is reduced to an intermediate pressure in an economizer expansion device (38), wherein the refrigerant in the main path and the refrigerant in the economized path exchange heat therebetween in the economizer heat exchanger, and wherein the refrigerant in the economized path is injected into the economizer port of the variable speed single stage compressor and the refrigerant in the main path is expanded in the main expansion device.

8. The system as recited in claim 1 or 7 wherein the controller (62) increases the speed of the variable speed single stage compressor (22) when the air temperature detected by the temperature sensor (58) is greater than a threshold temperature programmed in the controller to reduce the air temperature to a set point temperature.

9. The system as recited in claim 8 wherein the controller (62) decreases the speed of the variable speed single stage compressor (22) when the air temperature is less than a second threshold temperature programmed in the controller, and the second threshold temperature is greater than the set point temperature.

10. The system as recited in claim 7 wherein the variable speed single stage compressor (22) includes a single compression chamber (52).

11. A method of optimizing a cooling capacity of a vapor compression system comprising the steps of:
compressing a refrigerant to a high pressure in a variable speed single stage compressor (22) including a compression chamber (52), a piston (56) that moves in the compression chamber and a seal (64) disposed between the piston and the walls of the compression chamber, wherein during a suction stroke the piston moves in a first direction to expand a volume of the compression chamber and blocks an economizer port (44) to prevent the refrigerant in an economized path (36) from entering the compression chamber and during a discharge stroke the piston moves in an opposing second direction to reduce the volume of the compression chamber to compress the refrigerant and blocks the economizer port to prevent the refrigerant in the economized path from entering the compression chamber, wherein during the suction stroke of the piston a pressure-operated suction valve (54) opens to allow refrigerant from a heat accepting heat exchanger (28) into the compression chamber and a pressure-operated discharge valve (66) is closed, wherein during the discharge stroke of the piston the pressure-operated discharge valve opens to allow the refrigerant to exit the compression chamber and flow toward a heat rejecting heat exchanger (24) and the pressure-operated suction valve is closed, and wherein toward the end of the suction stroke the piston no longer blocks the economizer port such that refrigerant at intermediate pressure enters the compression chamber from the economizer port and closes the pressure-operated suction valve, preventing refrigerant from entering through the suction port (50);
heating the refrigerant in a heat accepting heat exchanger (28) by accepting heat from an airflow to cool the airflow;
providing the airflow to cool an area (48);
detecting an air temperature of air in the area; and
controlling a speed of the variable speed single stage compressor based on the air temperature to match a cooling load requirement of the vapor compression system to cool the area.

12. The method as recited in claim 11 further including the steps of cooling the refrigerant in a heat rejecting heat exchanger (24) and expanding the refrigerant to a low pressure in a main expansion device (26).

13. The method as recited in claim 12 further including the steps of:
splitting the refrigerant from the heat rejecting heat exchanger into the economized path (36) and a main path (34);
expanding the refrigerant in the economized path to an intermediate pressure in an economizer expansion device (38),
exchanging heat between the refrigerant in the main path and the refrigerant in the economized path,
injecting the refrigerant in the economized path into the economizer port (44) of the variable speed single stage compressor (22), and
expanding the refrigerant in the main path in a main expansion device (26).

14. The method as recited in claim 11 further including the step of increasing the speed of the variable speed single stage compressor (22) when the air temperature is greater than a threshold temperature to reduce the air temperature to a set point temperature.

15. The method as recited in claim 14 further including the step of then decreasing the speed of the variable speed single stage compressor (22) when the air temperature is less than a second threshold temperature, wherein the second threshold temperature is greater than the set point temperature.

## Patentansprüche

1. Dampfkompressionssystem, umfassend:
einen drehzahlvariablen einstufigen Kompressor (22) zum Komprimieren eines Kältemittels auf einen Hochdruck, wobei der Kompressor einen Saugstutzen (50), einen Auslassstutzen (30) und einen Economiser-Stutzen (44) beinhaltet;
einen Economiser-Wärmetauscher (40);
einen wärmeannehmenden Wärmetauscher (28) zum Austausch von Wärme zwischen dem Kältemittel und einem Luftstrom, um das Kältemittel zu erwärmen und den Luftstrom zu kühlen, wobei der Luftstrom einem Bereich (48) bereitgestellt wird;
einen Temperatursensor (58) zum Erfassen einer Lufttemperatur von Luft in dem Bereich; und
eine Steuerung (62), die eine Drehzahl des drehzahlvariablen einstufigen Kompressors auf Grundlage der Lufttemperatur anpasst, damit sie mit einer Kühllastanforderung des Dampfkompressionssystems zum Kühlen des Bereichs übereinstimmt;
**dadurch gekennzeichnet, dass** der drehzahlvariable einstufige Kompressor eine Kompressionskammer (52), einen Kolben (56), der sich in der Kompressionskammer bewegt, und eine Dichtung (64), die zwischen dem Kolben und den Wänden der Kompressionskammer angeordnet ist, beinhaltet, wobei sich der Kolben während eines Saughubs in eine erste Richtung bewegt, um ein Volumen der Kompressionskammer zu expandieren, und den Economiser-Stutzen blockiert, um zu verhindern, dass das Kältemittel auf einer Strecke mit Economiser (36) in die Kompressionskammer eintritt und sich der Kolben während eines Auslasshubs in eine gegenüberliegende zweite Richtung bewegt, um das Volumen der Kompressionskammer zu reduzieren, um das Kältemittel zu komprimieren, und den Economiser-Stutzen blockiert, um zu verhindern, dass das Kältemittel auf der Strecke mit Economiser in die Kompressionskammer eintritt, wobei sich während des Saughubs des Kolbens ein druckbetriebenes Saugventil (54) öffnet, um zu ermöglichen, dass Kältemittel aus einem wärmeannehmenden Wärmetauscher (28) in die Kompressionskammer fließt und ein druckbetriebenes Auslassventil (66) geschlossen ist, wobei sich während des Auslasshubs des Kolbens das druckbetriebene Auslassventil öffnet, um zu ermöglichen, dass das Kältemittel aus der Kompressionskammer austritt und in Richtung eines wärmeabweisenden Wärmetauschers (24) fließt und das druckbetriebene Saugventil geschlossen ist, und wobei der Kolben gegen Ende des Saughubs den Economiser-Stutzen nicht länger blockiert, sodass Kältemittel bei Mitteldruck aus dem Economiser-Stutzen in die Kompressionskammer eintritt und das druckbetriebene Saugventil schließt, wodurch verhindert wird, dass Kältemittel durch den Saugstutzen eintritt.

2. System nach Anspruch 1, wobei der wärmeabweisende Wärmetauscher (24) zum Kühlen des Kältemittels und eine Hauptexpansionsvorrichtung (26) zum Expandieren des Kältemittels auf einen Niedrigdruck dient.

3. System nach Anspruch 2, wobei das Kältemittel aus dem wärmeabweisenden Wärmetauscher (24) in die Strecke mit Economiser (36) und eine Hauptstrecke (34) geteilt wird und das Kältemittel auf der Strecke mit Economiser in einer Economiser-Expansionsvorrichtung (38) auf einen Mitteldruck reduziert wird, wobei das Kältemittel auf der Hauptstrecke und das Kältemittel auf der Strecke mit Economiser in dem Wärmetauscher mit Economiser Wärme austauschen, und wobei das Kältemittel auf der Strecke mit Economiser in den Economiser-Stutzen des drehzahlvariablen einstufigen Kompressors (22) eingespritzt wird und das Kältemittel auf der Hauptstrecke in der Hauptexpansionsvorrichtung (26) expandiert wird.

4. System nach Anspruch 3, wobei die Kompressionskammer (52) eine Einzelkompressionskammer ist.

5. System nach Anspruch 1, ferner beinhaltend einen Motor (60) zum Steuern der Drehzahl des drehzahlvariablen einstufigen Kompressors (22) und Anpassen einer Massenflussrate des Kältemittels durch das Dampfkompressionssystem.

6. System nach Anspruch 1, wobei die Lufttemperatur eine Rücklufttemperatur der dem Bereich entnommenen Luft ist, wobei der Bereich ein gekühlter Behälter (48) ist.

7. Dampfkompressionssystem nach Anspruch 1, umfassend:
einen Motor (60) zum Steuern einer Drehzahl des drehzahlvariablen einstufigen Kompressors (22) und Anpassen einer Massenflussrate des Kältemittels durch das Dampfkompressionssystem;
einen wärmeabweisenden Wärmetauscher (24) zum Kühlen des Kältemittels;
eine Hauptexpansionsvorrichtung (26) zum Expandieren des Kältemittels auf einen Niedrigdruck;
wobei das Kältemittel aus dem wärmeabweisenden Wärmetauscher in die Strecke mit Economiser (36) und eine Hauptstrecke (34) geteilt wird und das Kältemittel auf der Strecke mit Economiser in einer Economiser-Expansionsvorrichtung (38) auf einen Mitteldruck reduziert wird, wobei das Kältemittel auf der Hauptstrecke und das Kältemittel auf der Strecke mit Economiser in dem Wärmetauscher mit Economiser Wärme austauschen, und wobei das Kältemittel auf der Strecke mit Economiser in den Economiser-Stutzen des drehzahlvariablen einstufigen Kompressors eingespritzt wird und das Kältemittel auf der Hauptstrecke in der Hauptexpansionsvorrichtung expandiert wird.

8. System nach Anspruch 1 oder 7, wobei die Steuerung (62) die Drehzahl des drehzahlvariablen einstufigen Kompressors (22) erhöht, wenn die von dem Temperatursensor (58) erfasste Lufttemperatur höher als eine in der Steuerung programmierte Schwellentemperatur ist, um die Lufttemperatur auf eine festgelegte Punkttemperatur zu reduzieren.

9. System nach Anspruch 8, wobei die Steuerung (62) die Drehzahl des drehzahlvariablen einstufigen Kompressors (22) reduziert, wenn die Lufttemperatur niedriger als eine in der Steuerung programmierte zweite Schwellentemperatur ist, und die zweite Schwellentemperatur höher als die festgelegte Punkttemperatur ist.

10. System nach Anspruch 7, wobei der drehzahlvariable einstufige Kompressor (22) eine Einzelkompressionskammer (52) beinhaltet.

11. Verfahren zur Optimierung einer Kühlkapazität eines Dampfkompressionssystems, umfassend die folgenden Schritte: Komprimieren eines Kältemittels auf einen Hochdruck in einem drehzahlvariablen einstufigen Kompressor (22), der eine Kompressionskammer (52), einen Kolben (56), der sich in der Kompressionskammer bewegt und eine Dichtung (64), die zwischen dem Kolben und den Wänden der Kompressionskammer angeordnet ist, beinhaltet, wobei sich der Kolben während eines Saughubs in eine erste Richtung bewegt, um ein Volumen der Kompressionskammer zu expandieren, und einen Economiser-Stutzen (44) blockiert, um zu verhindern, dass das Kältemittel auf einer Strecke mit Economiser (36) in die Kompressionskammer eintritt und sich der Kolben während eines Auslasshubs in eine gegenüberliegende zweite Richtung bewegt, um das Volumen der Kompressionskammer zu reduzieren, um das Kältemittel zu komprimieren, und den Economiser-Stutzen blockiert, um zu verhindern, dass das Kältemittel auf der Strecke mit Economiser in die Kompressionskammer eintritt, wobei sich während des Saughubs des Kolbens ein druckbetriebenes Saugventil (54) öffnet, um zu ermöglichen, dass Kältemittel aus einem wärmeannehmenden Wärmetauscher (28) in die Kompressionskammer fließt und ein druckbetriebenes Auslassventil (66) geschlossen ist, wobei sich während des Auslasshubs des Kolbens das druckbetriebene Auslassventil öffnet, um zu ermöglichen, dass das Kältemittel aus der Kompressionskammer austritt und in Richtung eines wärmeabweisenden Wärmetauschers (24) fließt und das druckbetriebene Saugventil geschlossen ist, und wobei der Kolben gegen Ende des Saughubs den Economiser-Stutzen nicht länger blockiert, sodass Kältemittel bei Mitteldruck aus dem Economiser-Stutzen in die Kompressionskammer eintritt und das druckbetriebene Saugventil schließt, wodurch verhindert wird, dass Kältemittel durch den Saugstutzen (50) eintritt; Erwärmen des Kältemittels in einem wärmeannehmenden Wärmetauscher (28) durch Annahme von Wärme aus einem Luftstrom, um den Luftstrom zu kühlen;
Bereitstellen des Luftstroms, um einen Bereich (48) zu kühlen; Erfassen einer Lufttemperatur von Luft in dem Bereich; und Steuern einer Drehzahl des drehzahlvariablen einstufigen Kompressors auf Grundlage der Lufttemperatur, damit sie mit einer Kühllastanforderung des Dampfkompressionssystems zum Kühlen des Bereichs übereinstimmt.

12. Verfahren nach Anspruch 11, ferner beinhaltend die Schritte des Kühlens des Kältemittels in einem wärmeabweisenden Wärmetauscher (24) und Expandierens des Kältemittels auf einen Niedrigdruck in einer Hauptexpansionsvorrichtung (26).

13. Verfahren nach Anspruch 12, ferner die folgenden Schritte beinhaltend:
Teilen des Kältemittels aus dem wärmeabweisenden Wärmetauscher in die Strecke mit Economiser (36) und eine Hauptstrecke (34);
Expandieren des Kältemittels auf der Strecke mit Economiser auf einen Mitteldruck in einer Economiser-Expansionsvorrichtung (38);
Austauschen von Wärme zwischen dem Kältemittel auf der Hauptstrecke und dem Kältemittel auf der Strecke mit Economiser;
Einspritzen des Kältemittels auf der Strecke mit Economiser in den Economiser-Stutzen (44) des drehzahlvariablen einstufigen Kompressors (22), und
Expandieren des Kältemittels auf der Hauptstrecke in einer Hauptexpansionsvorrichtung (26).

14. Verfahren nach Anspruch 11, ferner beinhaltend den Schritt des Erhöhens der Drehzahl des drehzahlvariablen einstufigen Kompressors (22), wenn die Lufttemperatur höher als eine Schwellentemperatur ist, um die Lufttemperatur auf eine festgelegte Punkttemperatur zu reduzieren.

15. Verfahren nach Anspruch 14, ferner beinhaltend den Schritt des Reduzierens der Drehzahl des drehzahlvariablen einstufigen Kompressors (22), wenn die Lufttemperatur niedriger als eine zweite Schwellentemperatur ist, wobei die zweite Schwellentemperatur höher als die festgelegte Punkttemperatur ist.

## Revendications

1. Système à compression de vapeur, comprenant :
un compresseur mono-étage à vitesse variable (22) pour comprimer un fluide frigorigène à une haute pression, le compresseur comportant un orifice d'aspiration (50), un orifice de refoulement (30), et un orifice d'économiseur (44) ;
un échangeur de chaleur économiseur (40) ;
un échangeur de chaleur acceptant de la chaleur (28) pour échanger de la chaleur entre le fluide frigorigène et un écoulement d'air pour chauffer le fluide frigorigène et refroidir l'écoulement d'air, dans lequel l'écoulement d'air est fourni dans une zone (48) ;
une sonde de température (58) pour détecter une température de l'air dans la zone ; et
un contrôleur (62) qui ajuste une vitesse du compresseur mono-étage à vitesse variable d'après la température d'air de l'air pour correspondre au besoin d'une charge de refroidissement du système à compression de vapeur pour refroidir la zone ;
**caractérisé en ce que** le compresseur mono-étage à vitesse variable comporte une chambre de compression (52), un piston (56) qui se déplace dans la chambre de compression, et un joint d'étanchéité (64) disposé entre le piston et les parois de la chambre de compression, dans lequel pendant la course d'aspiration le piston se déplace dans une première direction pour dilater un volume de la chambre de compression et bloque l'orifice d'économiseur pour empêcher le fluide frigorigène contenu dans une voie économisée (36) d'entrer dans la chambre de compression et pendant une course de refoulement le piston se déplace dans une deuxième direction opposée pour réduire le volume de la chambre de compression pour comprimer le fluide frigorigène et bloquer l'orifice d'économiseur pour empêcher le fluide frigorigène contenu dans une voie économisée (36) d'entrer dans la chambre de compression, dans lequel pendant la course d'aspiration du piston une vanne d'aspiration actionnée par pression (54) s'ouvre pour permettre à du fluide frigorigène de passer d'un échangeur de chaleur acceptant de la chaleur (28) à la chambre de compression et une vanne de refoulement actionnée par pression (66) est fermée, dans lequel pendant la course de refoulement du piston la vanne de refoulement actionnée par pression s'ouvre pour permettre au fluide frigorigène de sortir de la chambre de compression vers un échangeur de chaleur rejetant de la chaleur (24) et la vanne d'aspiration actionnée par pression est fermée, et dans lequel vers la fin de la course d'aspiration le piston ne bloque plus l'orifice d'économiseur de sorte que du fluide frigorigène à une pression intermédiaire entre dans la chambre de compression depuis l'orifice d'économiseur et ferme la vanne d'aspiration actionnée par pression, empêchant que du fluide frigorigène n'entre par l'orifice d'aspiration.

2. Système selon la revendication 1 dans lequel 1'échangeur de chaleur rejetant de la chaleur (24) sert à refroidir le fluide frigorigène et un dispositif d'expansion principal (26) à dilater le fluide frigorigène à une basse pression.

3. Système selon la revendication 2,
dans lequel le fluide frigorigène provenant de 1'échangeur de chaleur rejetant de la chaleur (24) est divisé dans la voie économisée (36) et une voie principale (34), et le fluide frigorigène dans la voie économisée est réduit à une pression intermédiaire dans un dispositif d'expansion économiseur (38), dans lequel le fluide frigorigène contenu dans la voie principale et le fluide frigorigène contenu dans la voie économisée échangent de la chaleur entre eux dans 1'échangeur de chaleur économiseur, et
dans lequel le fluide frigorigène contenu dans la voie économisée est injecté dans l'orifice d'économiseur du compresseur mono-étage à vitesse variable (22) et le fluide frigorigène contenu dans la voie principale est dilaté dans le dispositif d'expansion principal (26).

4. Système selon la revendication 3 dans lequel la chambre de compression (52) est une chambre de compression unique.

5. Système selon la revendication 1 comportant en outre un moteur (60) pour contrôler la vitesse du compresseur mono-étage à vitesse variable (22) et ajuster le débit massique du fluide frigorigène à travers le système à compression de vapeur.

6. Système selon la revendication 1 dans lequel la température d'air est une température d'air de retour de l'air aspiré dans la zone, dans lequel la zone est un récipient réfrigéré (48).

7. Système à compression de vapeur selon la revendication 1 comprenant
un moteur (60) pour contrôler la vitesse du compresseur mono-étage à vitesse variable (22) et ajuster le débit massique du fluide frigorigène à travers le système à compression de vapeur ;
un échangeur de chaleur rejetant de la chaleur (24) pour refroidir le fluide frigorigène ;
un dispositif d'expansion principal (26) pour dilater le fluide frigorigène à une basse pression ;
dans lequel le fluide frigorigène provenant de l'échangeur de chaleur rejetant de la chaleur est divisé dans la voie économisée (36) et la voie principale (34), et le fluide frigorigène contenu dans la voie économisée est réduit à une pression intermédiaire dans un dispositif d'expansion principal (38), dans lequel le fluide frigorigène contenu dans la voie principale et le fluide frigorigène contenu dans la voie économisée échangent de la chaleur entre eux dans l'échangeur de chaleur économiseur, et dans lequel le fluide frigorigène contenu dans la voie économisée est injecté dans l'orifice d'économiseur du compresseur mono-étage à vitesse variable et le fluide frigorigène contenu dans la voie principale est dilaté dans le dispositif d'expansion principal.

8. Système selon la revendication 1 ou 7 dans lequel le contrôleur (62) augmente la vitesse du compresseur mono-étage à vitesse variable (22) quand la température d'air dirigée par la sonde de température (58) est plus grande que la température seuil programmée dans le contrôleur pour réduire la température d'air à une température de consigne.

9. Système selon la revendication 8 dans lequel le contrôleur (62) diminue la vitesse du compresseur mono-étage à vitesse variable (22) quand la température d'air est plus petite qu'une deuxième température seuil programmée dans le contrôleur, et que la deuxième température seuil est plus grande que la température de consigne.

10. Système selon la revendication 7 dans lequel le compresseur mono-étage à vitesse variable (22) comporte une chambre de compression unique (52).

11. Procédé d'optimisation de la capacité de refroidissement d'un système à compression de vapeur comprenant les étapes consistant à :
comprimer un fluide frigorigène à une haute pression dans un compresseur mono-étage à vitesse variable (22) comportant une chambre de compression (52), un piston (56) qui se déplace dans la chambre de compression et un joint d'étanchéité (64) disposé entre le piston et les parois de la chambre de compression, dans lequel pendant la course d'aspiration le piston se déplace dans une première direction pour dilater un volume de la chambre de compression et bloque un orifice d'économiseur (44) pour empêcher le fluide frigorigène contenu dans une voie économisée (36) d'entrer dans la chambre de compression et pendant une course de refoulement le piston se déplace dans une deuxième direction opposée pour réduire le volume de la chambre de compression pour comprimer le fluide frigorigène et bloquer l'orifice d'économiseur pour empêcher le fluide frigorigène dans une voie économisée d'entrer dans la chambre de compression, dans lequel pendant la course d'aspiration du piston une vanne d'aspiration actionnée par pression (54) s'ouvre pour permettre à du fluide frigorigène de passer d'un échangeur de chaleur acceptant de la chaleur (28) à la chambre de compression et une vanne de refoulement actionnée par pression (66) est fermée, dans lequel pendant la course de refoulement du piston la vanne de refoulement actionnée par pression s'ouvre pour permettre au fluide frigorigène de sortir de la chambre de compression vers un échangeur de chaleur rejetant de la chaleur (24) et la vanne d'aspiration actionnée par pression est fermée, et dans lequel vers la fin de la course d'aspiration le piston ne bloque plus l'orifice d'économiseur de sorte que du fluide frigorigène à une pression intermédiaire entre dans la chambre de compression depuis l'orifice d'économiseur et ferme la vanne d'aspiration actionnée par pression, empêchant que du fluide frigorigène n'entre par l'orifice d'aspiration (50) ;
chauffer le fluide frigorigène dans 1'échangeur de chaleur acceptant de la chaleur (28) en acceptant de la chaleur provenant d'un écoulement d'air pour refroidir l'écoulement d'air ;
fournir l'écoulement d'air pour refroidir une zone (48) ;
détecter la température de l'air dans la zone ; et
contrôler la vitesse du compresseur mono-étage à vitesse variable d'après la température d'air pour correspondre au besoin de la charge de refroidissement du système à compression de vapeur pour refroidir la zone.

12. Procédé selon la revendication 11 comportant en outre les étapes consistant à refroidir le fluide frigorigène dans l'échangeur de chaleur rejetant de la chaleur (24) et dilater le fluide frigorigène à une basse pression dans un dispositif d'expansion principal (26).

13. Procédé selon la revendication 12 comportant en outre les étapes consistant à :
diviser le fluide frigorigène provenant de l'échangeur de chaleur rejetant de la chaleur dans la voie économisée (36) et la voie principale (34) ;
dilater le fluide frigorigène dans la voie économisée à une pression intermédiaire dans un dispositif d'expansion économiseur (38),
échanger de la chaleur entre le fluide frigorigène contenu dans la voie principale et le fluide frigorigène contenu dans la voie économisée,
injecter le fluide frigorigène contenu dans la voie économisée dans l'orifice d'économiseur (44) du compresseur mono-étage à vitesse variable (22), et
dilater le fluide frigorigène contenu dans la voie principale dans un dispositif d'expansion principal (26).

14. Procédé selon la revendication 11 comportant en outre les étapes consistant à augmenter la vitesse du compresseur mono-étage à vitesse variable (22) quand la température d'air est plus grande que la température seuil pour réduire la température d'air à une température de consigne.

15. Procédé selon la revendication 14 comportant en outre l'étape consistant à diminuer la vitesse du compresseur mono-étage à vitesse variable (22) quand la température d'air est plus petite qu'une deuxième température seuil, dans lequel la deuxième température seuil est plus grande que la température de consigne.
